(19) Europäisches Patentamt
European Patent Office
Office européen des brevets

(11) **EP 2 814 165 B1**

(12) **EUROPEAN PATENT SPECIFICATION**

(45) Date of publication and mention
of the grant of the patent:
**04.07.2018 Bulletin 2018/27**

(51) Int Cl.:
***H02M 3/335*** *(2006.01)*      *H02M 1/00* *(2006.01)*

(21) Application number: **14152666.5**

(22) Date of filing: **27.01.2014**

(54) **DC Power Supply**

Gleichstromversorgung

Alimentation électrique CC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2013 JP 2013070939**

(43) Date of publication of application:
**17.12.2014 Bulletin 2014/51**

(73) Proprietors:
• **Hitachi, Ltd.**
  **Tokyo (JP)**
• **Hitachi Mito Engineering Co., Ltd.**
  **Hitachinaka-shi**
  **Ibaraki (JP)**

(72) Inventors:
• **Shinomiya, Takeshi**
  **Chiyoda-ku, Tokyo 100-8280 (JP)**
• **Muraoka, Kazufumi**
  **Chiyoda-ku, Tokyo 100-8280 (JP)**
• **Kojima, Tetsuo**
  **Chiyoda-ku, Tokyo 100-8280 (JP)**
• **Kawamoto, Takehiro**
  **Chiyoda-ku, Tokyo 100-8280 (JP)**
• **Sugiura, Tetsu**
  **Chiyoda-ku, Tokyo 100-8280 (JP)**

(74) Representative: **Moore, Graeme Patrick**
  **Mewburn Ellis LLP**
  **City Tower**
  **40 Basinghall Street**
  **London EC2V 5DE (GB)**

(56) References cited:
**EP-A2- 2 528 218      JP-A- H01 295 675
JP-A- 2012 075 210      US-A1- 2012 249 059**

## Description

### BACKGROUND OF THE INVENTION

#### 1. Field of the Invention

The present invention relates generally to direct-current power supplies, and more particularly, to a direct-current power supply that uses semiconductor switching elements.

#### 2. Description of the Related Art

An insulated DC-DC converter is used in such applications as changing a direct-current voltage level to another desired one, stabilizing an unstable DC power supply, or requiring a DC power supply whose output line is electrically insulated from an input line. The insulated DC-DC converter includes a primary circuit that generates an alternating current (AC) from a direct current (DC), an insulating transformer, and a secondary circuit (rectification circuit) that converts AC into DC.

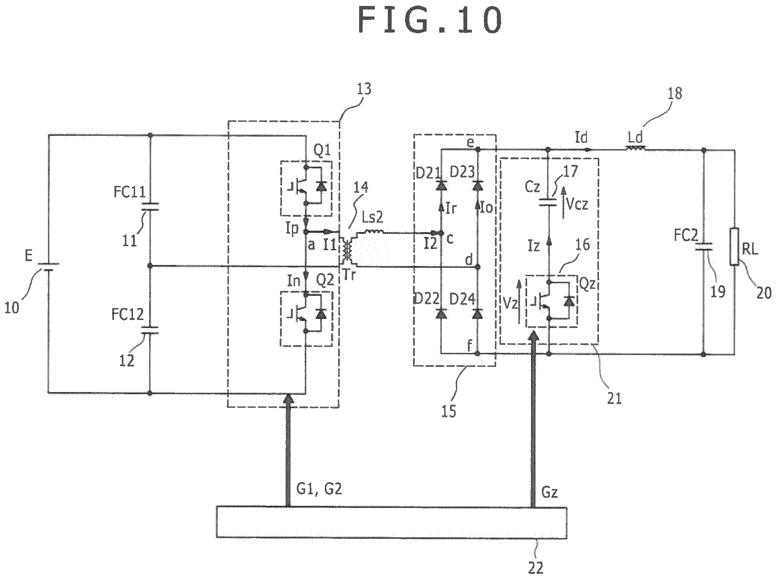

Although DC-DC converters can include a miniaturized insulating transformer by enhancing a voltage application frequency, it has a problem with suppressing switching loss due to the enhancement of the frequency. A soft-switching scheme that uses a resonance circuit to reduce switching loss is known as a solution to the problem. Exemplary composition of the resonance circuit is shown in Fig. 10. This DC-DC converter includes a primary circuit that converts DC into AC, a transformer, a secondary circuit that converts AC into DC, and a smoothing circuit. The converter supplies electric power to a DC load.

In order to reduce the switching loss that may occur in the primary circuit, the DC-DC converter has a series circuit connected across an output of the secondary circuit, with the series circuit including a resonance capacitor and a switching element. Hereinafter, the resonance capacitor and the switching element are referred to collectively as the resonance switch. The resonance capacitor and a secondary-side leakage inductance of the transformer serve to form the resonance circuit. In operation, the resonance switch is turned on prior to turn-off of a main switching element of the primary circuit, and a charge/discharge current of the resonance capacitor is used to reduce to zero a secondary current of the transformer that the main switching element is to cut off, and to reduce a primary current of the transformer to a level only of an excitation current thereof. Thus, pseudo-zero-current cutoff (hereinafter, referred to simply as zero-current cutoff) is realized, which in turn enables turn-off loss of the primary circuit to be significantly reduced. JP-2012-75210-A describes an example of such circuit composition.

### SUMMARY OF THE INVENTION

Such a DC-DC converter has two problems associated with the turn-off of the resonance switch.

A first problem is discussed below. During the turn-on of the resonance switch, a resonance current flows through the resonance circuit, and the moment the resonance switch is turned on, a discharge current of the energy which has been slightly stored within the resonance capacitor flows through a rectifying diode section of the secondary circuit and the resonance circuit. If both the resistance and inductance developed in the circuit composed by a path extending between the secondary circuit and the resonance circuit have a small value, the discharge current significantly changes to become a surge current. In addition, the surge current becomes oscillatory since the inductance generated by the resonance capacitor and an electrical interconnect line is predominant. Because of the surge current, the current through the resonance circuit suddenly changes in oscillatory fashion and the voltage applied to the resonance switch also becomes oscillatory. The current and voltage that suddenly change in this way are liable to cause noise and adversely affect external devices. In particular, if such a current or voltage forms a waveform that changes at a high frequency, this could cause electromagnetic noise and adversely affect the external devices. In order to solve this problem, there exists a method in which, for example if the resonance switch is IGBT, IGBT gate resistance intended for turn-on is set to be high to realize gentle turn-on and thus to make the turn-on surge current sluggish for suppressed noise. This method, however, leads to increases in turn-on loss of the resonance switch and in a geometry of a cooler required for a circuit-mounting device.

A second problem is that the surge current associated with the turn-on of the resonance switch may augment turn-on loss of the resonance switch.

In order to solve the foregoing problems, the present invention provides a direct-current power supply according to claim 1.

A ratio of inductance of a surge current suppression reactor to a sum of leakage inductance of the transformer and the inductance of the surge current suppression reactor (the sum is referred to as resonance inductance) is set so that turn-on loss of the resonance switch is reduced within an allowable operating voltage range, thereby suppressing a surge current.

In a desirable embodiment of the present invention, turn-on noise and turn-on loss of the resonance switch can be suppressed and an efficient system constructed.

### BRIEF DESCRIPTION OF THE DRAWINGS

Other objects and advantages of the invention will become apparent from the following description of embodiments with reference to the accompanying drawings in which:

Fig. 1 is a diagram that shows an example of main circuit composition of a DC power supply according to a first embodiment of the present invention;

Fig. 2 is a diagram that shows an example of an operating waveform in the DC power supply shown in Fig. 1;

Fig. 3 is a diagram that shows examples of operating waveforms of a resonance switch in the DC power supply shown in Fig. 1;

Fig. 4 is a diagram that shows an example in which a ratio of inductance of a surge current suppression reactor to resonance inductance is set in the first embodiment of the present invention;

Fig. 5 is a diagram that shows waveforms of the resonance switch voltage and resonance circuit current as measured during turn-on of the resonance switch when the ratio of the inductance of the surge current suppression reactor to the resonance inductance was actually changed in the circuit composition of Fig. 1;

Fig. 6 is a diagram that shows an example of main circuit composition of a DC power supply according to a second embodiment of the present invention;

Fig. 7 is a diagram that shows an example of main circuit composition of a DC power supply according to a third embodiment of the present invention;

Fig. 8 is a diagram that shows an example of an operating waveform in the DC power supply shown in Fig. 7;

Fig. 9 is a diagram that shows an example of main circuit composition of a DC power supply according to a fourth embodiment of the present invention; and

Fig. 10 is a diagram that shows an example of circuit composition of a conventional DC power supply.

DESCRIPTION OF THE PREFERRED EMBODIMENTS

Hereunder, embodiments of the present invention will be described with reference to the accompanying drawings.

First Embodiment

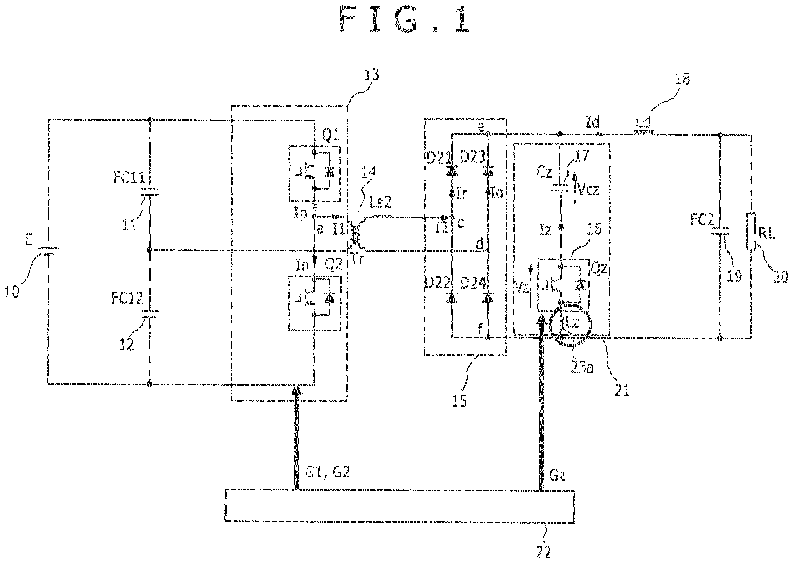

Fig. 1 is a diagram that shows an example of main circuit composition of a DC power supply to which a first embodiment of the present invention can be applied. This DC power supply includes a DC-DC converter in which are combined a primary circuit 13 that receives a voltage of a DC voltage source 10 as an input voltage and converts DC into AC, a transformer 14, and a secondary circuit 15. The converter under an electrically insulated condition supplies different DC voltages to a load 20.

The primary circuit 13 is a two-level circuit connected to a series circuit of two filter capacitors 11 (FC11) and 12 (FC12) that are connected in parallel to the DC voltage source 10. That is to say, two main switching elements Q1 and Q2 each having an antiparallel diode, are interconnected in series, each form an upper or lower arm, and are connected in parallel to the filter capacitors 11 (FC11) and 12 (FC12). A section from a series connection point "a" between the upper and lower arms to a series connection point "b" between the filter capacitors 11 (FC11) and 12 (FC12) serves as an AC output terminal, across which a primary winding of the transformer 14 is connected.

The transformer 14 that receives AC output power from the primary circuit 13 is connected to the secondary circuit 15 via a secondary winding, and outputs stepped-down (or stepped-up) AC power to the secondary circuit 15. A series circuit formed by a resonance switch 16 (Qz), a resonance capacitor 17 (Cz), and a surge suppression reactor 23a (Lz), is connected to a DC output end of the secondary circuit 15, and when the resonance switch 16 turns on, a sum of leakage inductance of the transformer 14 and interconnect inductance of from the transformer 14 to a junction of a resonance circuit 21 through the secondary circuit 15, and the resonance circuit 21 serve to form a resonance circuit. Here, the sum of the leakage inductance of the transformer 14 and the interconnect inductance mentioned above is expressed as the leakage inductance (Ls2) of the transformer 14. Since an interconnect inductance component of the leakage inductance Ls2 of the transformer 14 and the surge suppression reactor (Lz) each have a small inductance value, the inductance component can usually be controlled by changing a shape and/or length of the interconnect and used as the interconnect inductance. Here, the series circuit including the resonance switch 16 (Qz) and the resonance capacitor 17 (Cz) is called the resonance circuit 21. A filter reactor 18 (Ld) and a filter capacitor 19 (FC2), both for smoothing the DC power that is output from the secondary circuit 15, are further connected and a voltage across the filter capacitor FC2 is supplied to the load 20. The surge current suppression reactor Lz may be connected in series to any internal section of the resonance circuit 21. More specifically, the surge current suppression reactor Lz may be connected in series either to a higher-voltage side than the resonance capacitor 17 (Cz), or between the resonance capacitor 17 (Cz) and the resonance switch 16 (Qz), or to a lower-voltage side than the resonance switch 16 (Qz).

A control device 22 that outputs gate pulse signals G1 and G2 of the main switching elements Q1 and Q2 constituting the primary circuit 13, and a gate pulse signal Gz of the switching element Qz constituting the resonance switch 16, is included as a control circuit in the above main circuit composition.

Through the control device 22, the DC-DC converter can activate the resonance switch Qz in turn-off timing of the main switching elements Q1 and Q2 within the primary circuit 13, then superimpose a resonance current Iz upon a secondary current I2 of the transformer 14, and thus temporarily reduce the secondary current I2 to zero and a primary current I1 to a level only of an excitation current of the transformer 14. The converter can significantly reduce turn-off loss of the primary circuit 13 by turning off the internal main switching elements Q1 and Q2 of the primary circuit 13 in the above timing.

While the main switching elements Q1 and Q2 constituting the primary circuit 13 are off, the primary current I1 and the secondary current I2 are zero, but a free-wheeling current is constantly flowing through diodes that constitute the secondary circuit 15. When the main switching element Q1 or Q2 constituting the primary circuit 13 turns on in that state, the primary current I1 and the secondary current I2 begin to flow, magnitude of the secondary current I2 agrees with that of the load current Id. At this time, a current of the same level as that of the secondary current I2 flows into half of the diodes constituting the secondary circuit 15, and no current flows into the remaining half of the diodes.

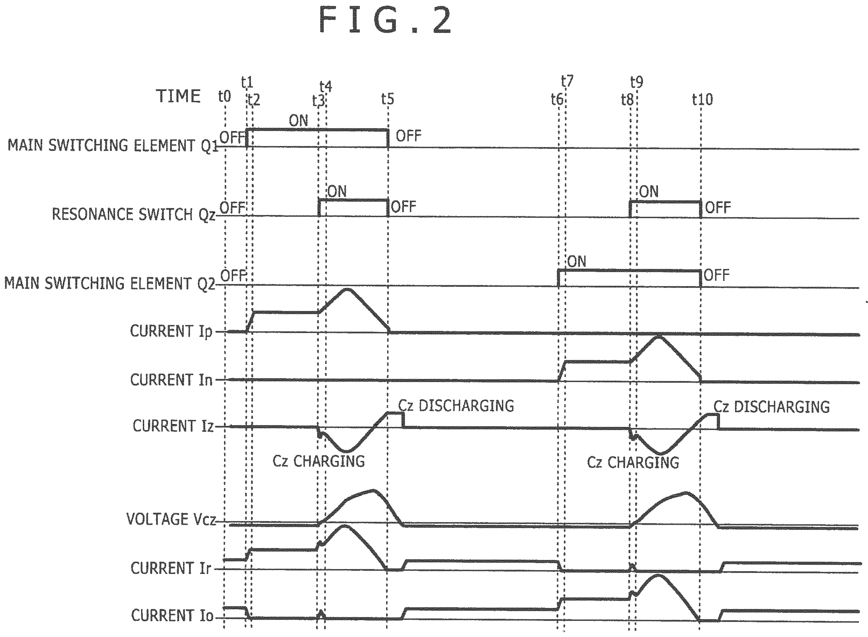

Fig. 2 is a diagram that shows an example of an operating waveform in the DC power supply shown in Fig. 1. Operation of the DC power supply of Fig. 1 under normal conditions is described below using the operating waveform.

At time t0, the main switching elements Q1 and Q2 are off. From this state, the main switching element Q1 turns on at time t1 and a current Ip flows into the main switching element Q1. At this time, a current Ir flows into diodes D21 and D24 of the secondary circuit 15. Also, a current Io decreases.

The resonance switch Qz turns on at time t3. At this time, a charge current Iz first flows from the secondary circuit 15 into the resonance capacitor Cz. At this time, during a period up to a time when a voltage stored in a condition slightly biased to a negative side within the resonance capacitor Cz decreases to zero, the free-wheeling current first continues to flow through the diodes D21 to D24 of the secondary circuit 15 and the resonance circuit at up to time t4. After this, when the resonance capacitor Cz becomes positively biased, the current Io decreases to zero and the charge current Iz starts to flow from the secondary circuit 15 into the resonance capacitor Cz. The current Iz is a sum of the leakage inductance Ls of the transformer, the inductance of the surge suppression reactor Lz, and a series resonance current of the resonance capacitor Cz. The current Ip through the main switching element Q1 and the current Ir through the diodes D21, D24 also increase with such resonance operation of the resonance circuit.

After that, although the main switching element Q1 and the resonance switch Qz have respective gate signals turned off at time t5, the resonance capacitor Cz is discharging and at this time the load current Id is supplied from the resonance circuit 21, so the current Ir through the diodes D21, D24 is zero. At this time, therefore, an amount of current Ip as small as that only of the excitation current of the transformer Tr is flowing through the main switching element Q1. Thus, the main switching element Q1 and the resonance switch Qz turn off to enable soft switching.

At up to time t6, the main switching elements Q1 and Q2 are off. At this time, under a completed state of the discharge from the resonance switch Cz, the load current Id is.flowing in its free-wheeling state through the diodes D21 to D24 of the secondary circuit 15.

At the time t6, the main switching element Q2 turns on and a current In flows into the main switching element Q2. At this time, the current Io flows into the diodes D22, D23 of the secondary circuit 15. Also, the current Ir decreases.

The resonance switch Qz turns on at time t8. The charge current Iz at this time first flows from the secondary circuit 15 into the resonance capacitor Cz. At this time, as with the time t3, during the period up to the time when the voltage stored in the condition slightly biased to the negative side within the resonance capacitor Cz decreases to zero, the free-wheeling current first continues to flow through the diodes D21 to D24 of the secondary circuit 15 and the resonance circuit at up to time t9. After this, when the resonance capacitor Cz becomes positively biased, the current Ir decreases to zero and the charge current Iz starts to flow from the secondary circuit 15 into the resonance capacitor Cz. The current In through the main switching element Q2 and the current Io through the diodes D22, D23 also increase with such resonance operation of the resonance circuit.

After that, although the main switching element Q2 and the resonance switch Qz have the respective gate signals turned off at time t10, the resonance capacitor Cz is discharging and at this time the load current Id is supplied from the resonance circuit 21, so the current Io through the diodes D22, D23 is zero. At this time, therefore, an amount of current In as small as that only of the excitation current of the transformer Tr is flowing through the main switching element Q2. Thus, the main switching element Q2 and the resonance switch Qz turn off to enable soft switching.

After the time t10 onward, the main switching elements Q1 and Q2 are off. At this time, under the completed state of the discharge from the resonance switch Cz, the load current Id is flowing in the free-wheeling state through the diodes D21 to D24 of the secondary circuit 15.

The operation of the resonance circuit 21 from the time t3 to the time t4, in Fig. 2, is described in further detail below.

At the time t3, the resonance switch Qz turns on and the amount of discharge from the resonance capacitor Cz equals the voltage stored in the condition slightly biased to the negative side within the resonance capacitor Cz, but the free-wheeling current flows through the resonance circuit 21 and the diodes D21 to D24 of the secondary circuit 15. At this time, if inductance of the circuit composed of a closed circuit formed by the resonance circuit 21 and the diodes D21 to D24 of the secondary circuit 15 is sufficiently small for the leakage inductance Ls2 of the transformer 14, part of the amount of current which discharges the negative bias of the resonance capacitor Cz at the moment of turn-off of the resonance switch Qz can be ignored as an amount equivalent to that of current which flows through the transformer 14, and the current flows through the closed circuit formed by the resonance circuit 21 and the secondary circuit 15. If the resonance capacitor Cz is initially charged at a voltage Vz0, the current "iz" of the resonance circuit 21 at that time is expressed by formula 1, and a maximum value of the current "iz" (i.e., a maximum value of the surge current), Izsm, is expressed by formula 2.

(Formula 1)

$$i_z = V_{z0}\sqrt{\frac{C_z}{L_z}}\sin\frac{1}{\sqrt{L_z C_z}}t$$

(Formula 2)

$$I_{zsm} = V_{z0}\sqrt{\frac{C_z}{L_z}}$$

where symbols Cz and Lz are used to denote a capacity of the resonance capacitor Cz and the inductance of the surge current suppression reactor Lz, respectively. The inductance Lz of the surge suppression reactance here includes all interconnect inductance of the resonance circuit 21 and the secondary circuit 15.

It can be seen from formula 2 that the maximum current Izsm increases with decreasing inductance Lz of the surge current suppression reactor. Increasing the inductance Lz of the surge current suppression reactor allows the maximum current Izsm to be correspondingly reduced and an abrupt flow of current through the resonance circuit during the turn-on of the resonance switch Qz to be suppressed. Differentiating formula 1 yields formula 3.

(Formula 3)

$$\frac{di_z}{dt} = \frac{V_{z0}}{L_z}\cos\frac{1}{\sqrt{L_z C_z}}t$$

Formula 3 indicates that as the inductance Lz of the surge current suppression reactor is reduced, a change rate of the current "iz" of the resonance circuit can be correspondingly increased (thus "iz" becomes a surge current), and that as Lz is increased, the change rate of the current "iz" can be correspondingly reduced. Since the surge current "iz" into the resonance circuit during the turn-on of the resonance switch Qz can be suppressed by reducing the maximum current Izsm and the change rate of the current, diz/dt, radiation noise can be reduced and the switching current value can also be suppressed. Therefore, turn-on loss of the resonance switch Qz can also be suppressed.

Generally, switching elements for use in a resonance switch Qz are used to form a bridge circuit and applied for inductive-load purposes. In this case, if the inductance component of the circuit during the turn-on of the switching elements is too large, this excessively changes the voltage of the switching elements having the upper and lower arms and deteriorates the circuit in radiation noise level. In the circuit composition of the present embodiment, however, no such circuit operation occurs. No radiation noise is therefore caused.

In addition, in the scheme of the present embodiment, no surge voltage associated with the turn-off of the switching elements occurs since the resonance switch Qz turns off with the current flowing through the antiparallel-connected diodes.

If the inductance of the surge current suppression reactor Lz is too large, however, when the discharge from the resonance circuit is completed, the voltage upon the resonance switch Qz increases in maximum value. In order to prevent this from occurring, the inductance of the surge current suppression reactor Lz is set to stay within a range not exceeding a maximum allowable operating voltage of the resonance switch Qz.

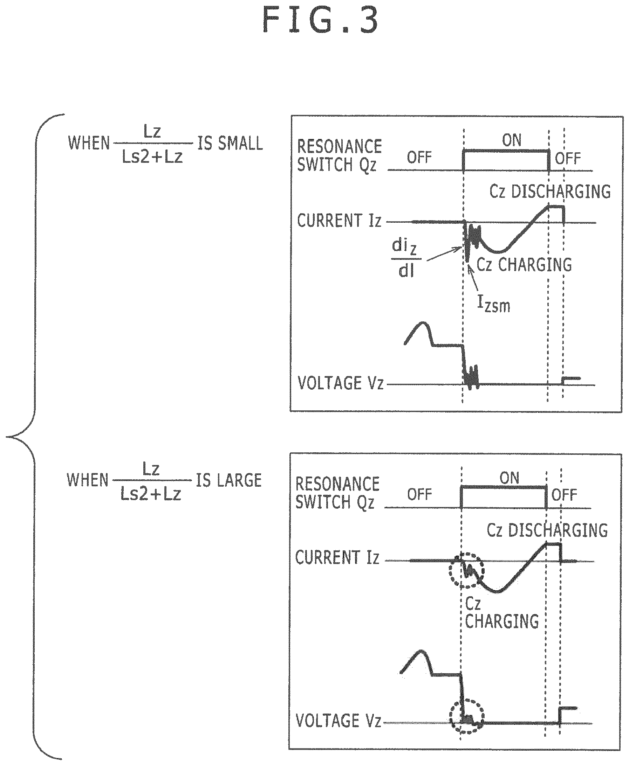

Incidentally, the resonance operation in Fig. 2 from the time t3 to the time t5 and from the time t8 to the time t10 changes a resonance period according to the particular sum of the leakage inductance Ls2 of the transformer 14 and the inductance Lz of the surge current suppression reactor. To solve the earlier-discussed problems without changing the resonance period, it is only necessary to change the ratio between the leakage inductance Ls2 of the transformer 14 and the inductance Lz of the surge current suppression reactor. Fig. 3 represents relationships established between the current Iz of the resonance circuit 21 and the voltage of the resonance switch Qz when the ratio Lz/(Ls2+Lz) of the surge current suppression inductance Lz to the sum Ls2+Lz (resonance inductance) of the leakage inductance Ls2 of the transformer 14 and the inductance Lz of the surge current suppression reactor is low and when the ratio Lz/(Ls2+Lz) is high. When the ratio Lz/(Ls2+Lz) of the surge current suppression inductance Lz to the resonance inductance Ls2+Lz is low, the moment the resonance switch turns on, an excessive surge current and a current high in the change rate of the current level are added to the current Iz and the waveform of the current Iz and the voltage waveform of the resonance switch Vz strongly oscillate. This causes significant noise and hence, significant turn-on loss of the resonance switch Qz as well. Conversely when the ratio Lz/(Ls2+Lz) of the surge current suppression inductance Lz to the resonance inductance Ls2+Lz is high, since the surge current added to the current Iz at the moment of the resonance switch turn-on is small and thus since the change rate of the current level is also low, the waveform of the current Iz and the voltage waveform of the resonance switch Vz do not strongly oscillate. Thus, the noise level detected will be reduced below that detected when the ratio Lz/(Ls2+Lz) of the surge current suppression inductance Lz to the resonance inductance Ls2+Lz is low, and a turn-on loss ratio of the resonance switch Qz will also be reduced.

For these reasons, including the inductance Lz in the resonance circuit 21 allows Lz/(Ls2+Lz) to be increased, the voltage oscillations of the resonance switch Vz to be suppressed, and the turn-on loss of the resonance switch Qz to be reduced.

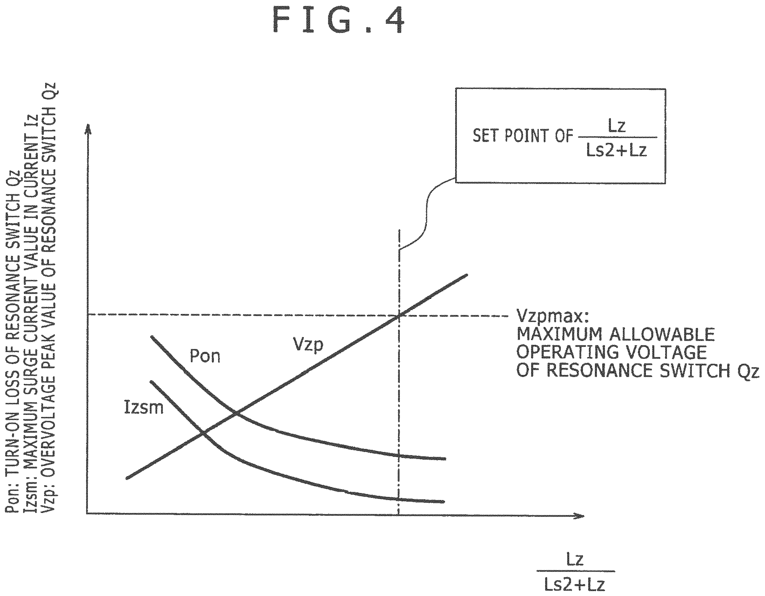

Fig. 4 shows an example of a relationship between the turn-on loss Pon of the resonance switch, the maximum surge current value Izsm in the current Iz, and an overvoltage Vzp of the resonance switch Qz, with respect to the ratio Lz/(Ls2+Lz) of the surge current suppression inductance Lz to the resonance inductance Ls2+Lz. This relationship changes according to particular characteristics of the resonance switch Qz. When IGBT is used as the resonance switch Qz, however, this relationship often holds. When the switching element Q1 or Q2 turns on, the resonance switch Qz reaches the highest voltage and takes a value of the overvoltage Vzp. As the ratio Lz/(Ls2+Lz) of the inductance Lz of the surge current suppression reactor to the resonance inductance Ls2+Lz increases, the turn-on loss Pon of the resonance switch and the maximum surge current value Izsm in the current Iz decrease, but the overvoltage Vzp of the resonance switch Qz increases.

Accordingly if the ratio Lz/(Ls2+Lz) of the inductance Lz of the surge current suppression reactor to the resonance inductance Ls2+Lz is set to the largest possible value in the range that the overvoltage Vzp of the resonance switch Qz does not exceed a withstand voltage thereof, the surge current added to the current Iz and the turn-on loss of the resonance switch Qz can both be minimized within a useable range. That is to say, Lz/(Ls2+Lz) is preferably set to a value at which the value of the overvoltage Vzp is smaller than a maximum allowable operating voltage of the resonance switch Qz, and the value itself of the overvoltage Vzp is preferably set to be smaller than the maximum allowable operating voltage of the resonance switch Qz.

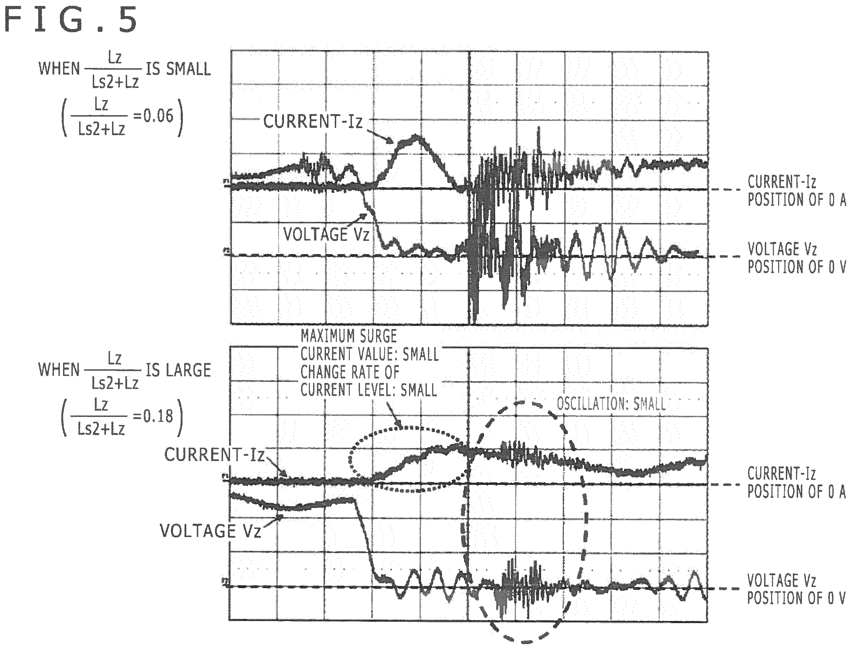

Fig. 5 shows waveforms of the resonance switch voltage Vz and resonance circuit current Iz as measured during the turn-on of the resonance switch when the ratio Lz/(Ls2+Lz) of the surge current suppression reactor's inductance Lz to the resonance inductance Ls2+Lz was actually changed (the current Iz in this case is shown as -Iz because of the flow in an inverse direction). Fig. 5 shows a case in which the ratio Lz/(Ls2+Lz) of the surge current suppression reactor's inductance Lz to the resonance inductance Ls2+Lz is small (0.06) and a case in which Lz/(Ls2+Lz) is large (0.18). It can be seen that increasing the ratio Lz/(Ls2+Lz) of the surge current suppression reactor's inductance Lz to the resonance inductance Ls2+Lz in this way leads to reduced signal oscillations of the current Iz and the voltage Vz.

Second Embodiment

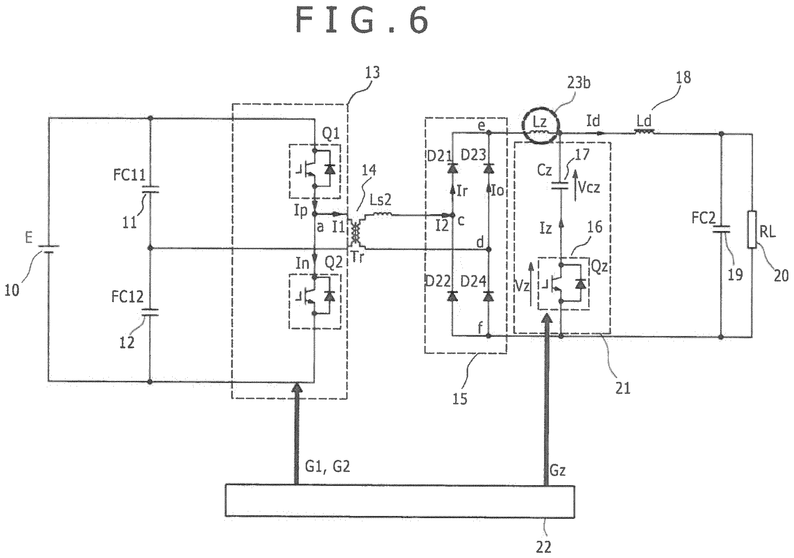

Fig. 6 is a diagram that shows an example of main circuit composition of a DC power supply according to a second embodiment of the present invention.

Basic circuit composition is substantially the same as in the first embodiment, so only a difference from the first embodiment is described below.

The circuit composition in Fig. 6 differs from that of Fig. 1 in that the surge suppression reactor Lz is provided between a positive output end of the secondary circuit 15 and a positive input end of the resonance circuit 21.

In this case, current flows into the surge suppression reactor Lz during a period minus the time from t5 and t10 to the completion of discharge of the resonance capacitor Cz, in the operating waveform diagram of Fig. 2. Such composition as shown in Fig. 6 can be applied when the surge suppression reactor Lz has a sufficiently small inductance (nearly 1/100 or less) with respect to that of the filter reactor Ld. The circuit composition shown in the present embodiment is effective when mounting of the surge suppression reactor Lz into the resonance circuit is difficult because of a nature of the composition. The surge current suppression reactor Lz (23a) in the first embodiment and Lz (23b) in the second embodiment may be connected in combination.

Alternatively, the surge suppression reactor Lz may be provided between a negative output end of the secondary circuit 15 and a negative input end of the resonance circuit 21, not between the positive output end of the secondary circuit 15 and the positive input end of the resonance circuit 21.

Third Embodiment

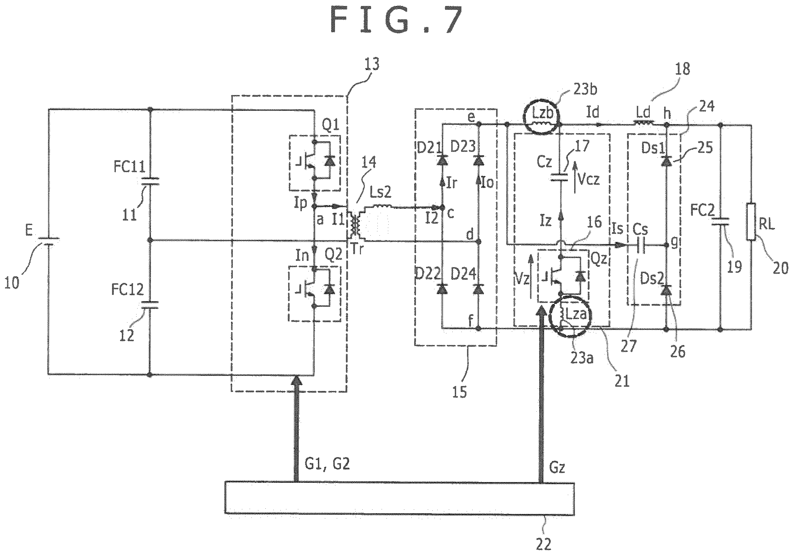

Fig. 7 is a diagram that shows an example of main circuit composition of a DC power supply according to a third embodiment of the present invention.

The present embodiment differs from the first embodiment in that a snubber circuit 24 is connected. More specifically, the snubber circuit 24 is added that connects a midpoint "h" between the filter reactor Ld and the filter capacitor FC2, and a point "f", by series connection of a diode 25 (Ds1) and a diode 26 (Ds2) for discharging a snubber capacitor Cs, and connects an output point "e" of the secondary circuit 15 and a middle point "g" between the above two points ("h" and "f"). The snubber circuit 24 plays a role of absorbing a surge voltage developed during recovery of the rectifying diodes D21 to D24 in the secondary circuit 15. The surge suppression reactor Lz may, as shown in the first embodiment, be connected inside the resonance circuit 21 (e.g., as Lza in Fig. 7), or as shown in the second embodiment, be connected between the output point "e" of the secondary circuit 15 and a point of connection to the resonance circuit (e.g., as Lzb in Fig. 7), or be connected to both.

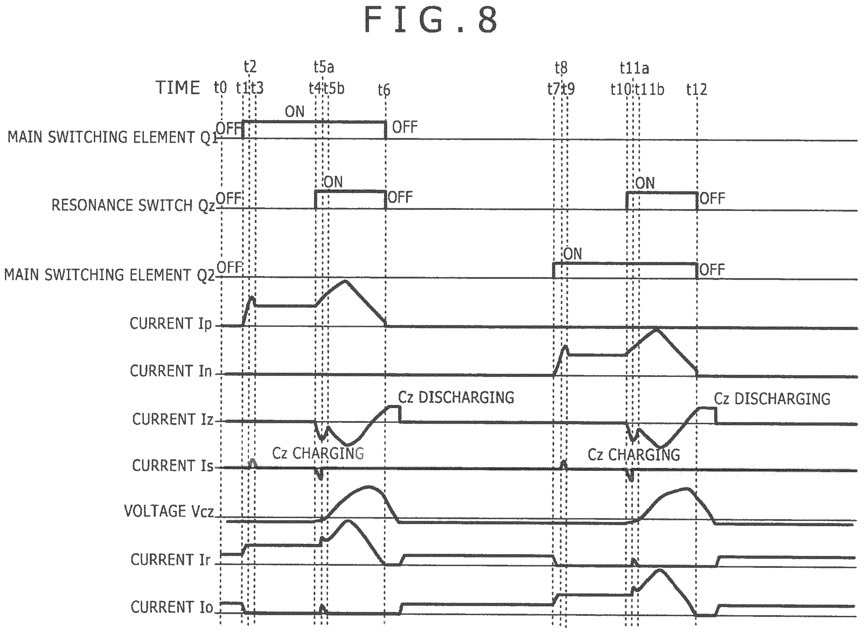

Fig. 8 is a diagram that shows an example of an operating waveform in the DC power supply shown in Fig. 7. Basic operation is substantially the same as in Fig. 2, so only differences from Fig. 2 are described below.

At time t4, the resonance switch Qz turns on, the snubber capacitor Cs discharges, and current flows into the resonance capacitor Cz through the snubber capacitor Cs-discharging diode Ds2. An inflow of current from the secondary circuit 15 at this time is slight and can therefore be ignored. If it is assumed that only the discharge current from the snubber capacitor Cs flows into the resonance capacitor Cz, then a maximum value Izsm of a current "iz" (i.e., a maximum value of a surge current) at an initial charging voltage Vs0 of the snubber capacitor Cs is expressed by formula 4 in which Cz and Vz0 in formula 2 are substituted by Cs and Vs0, respectively.

$$(\text{Formula } 4)$$

$$I_{zsm} = V_{s0}\sqrt{\frac{C_s}{L_z}}$$

where a capacity of the snubber capacitor Cs is also denoted by symbol Cs. Immediately after the snubber capacitor Cs has completely discharged at time t5a, a freewheeling current flows through the resonance circuit 21 and the secondary circuit 15. At time t5b, a current Io decreases to zero and a charging current flows from the secondary circuit 15 into the resonance capacitor Cz. Operation during an interval from time tl0 to time tllb is substantially the same as that of an interval from time t4 to time t5b, except that relationships between the main switching elements Q1 and Q2, currents Ip and In, and currents Ir and Io become an inverse.

Compared with that of the first embodiment, the maximum value Izsm of the surge current in the third embodiment increases by an equivalent of the discharge of the snubber capacitor Cs. The current "iz" also increases a change rate of its current level. This in turn causes correspondingly significant effects upon a turn-on radiation noise level and turn-on loss ratio of the resonance switch Qz. As described in the first embodiment, however, providing a surge current suppression reactor to resonance inductance Ls2+Lz allows the ratio Lz/(Ls2+Lz) of the inductance Lz to be set to a large value, which then allows the surge current in the current Iz to be suppressed and thus the turn-on loss of the resonance switch Qz to be suppressed as well. Additionally, if Lz/(Ls2+Lz) is desirably set to a value falling within the range that the overvoltage Vzp of the resonance switch Qz does not exceed a withstand voltage thereof, the surge current added to the current Iz and the turn-on loss of the resonance switch Qz can both be minimized.

Fourth Embodiment

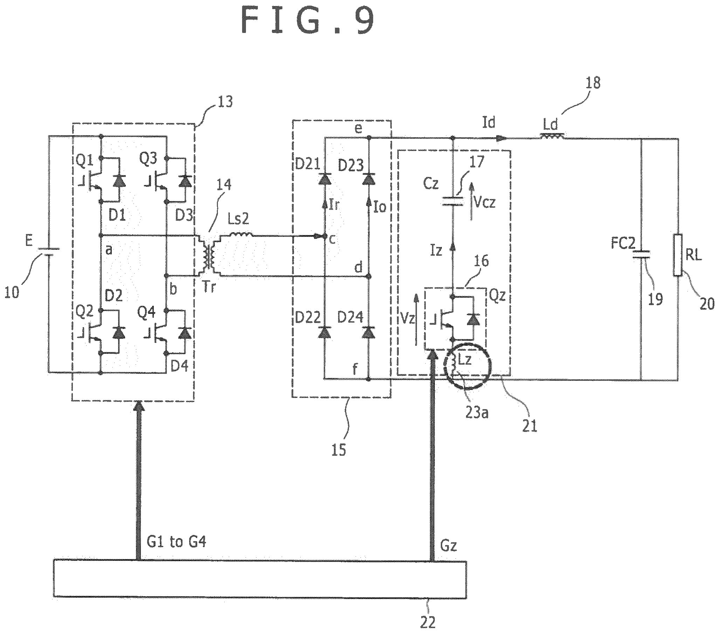

Fig. 9 is a diagram that shows an example of main circuit composition of a DC power supply according to a fourth embodiment of the present invention.

While examples of application of the present invention to such a two-level half-bridge circuit as shown in Fig. 1 have been described in the embodiments described above, the invention may also be applied to such a two-level circuit as shown in Fig. 9. In this case, switching timing of Q1 and Q4 in Fig. 9 will be replaced by that of Q1 in Fig. 2, and switching timing of Q2 and Q3 in Fig. 9 will be replaced by that of Q4 in Fig. 2. In addition, replacement of Q1 in Fig. 1 by Q1 and Q4 in Fig. 9, and replacement of Q4 in Fig. 1 by Q2 and Q3 in Fig. 9 will enable the invention to be applied to the circuit shown in Fig. 7. Furthermore, the invention can be applied even if the primary circuit 13 is composed to accept not only two levels, but also three levels or more.

As described in the embodiments, a larger Lz/(Ls2+Lz) value than in conventional technology can be set by connecting the surge current suppression reactor in series midway on the current path that extends from the positive output end of the secondary circuit via the resonance circuit to the negative output end of the secondary circuit, and adding the inductance component of the surge current suppression reactor to that of the current path formed by the secondary circuit and the resonance circuit. The effects of the present invention to suppress the turn-on noise of the resonance switch and to suppress the turn-on loss of the resonance switch can therefore be achieved.

The use of the DC power supplies described in the embodiments is not limited to specific applications. They can also be applied as DC power supplies that supply power, stepped down by a transformer, to auxiliary equipment of a railroad vehicle, such as an air-conditioning apparatus and lighting units. Application in this case is highly effective for reducing a switching loss ratio in the switching elements of the primary circuit, because the voltage of the DC power supply 10 is relatively high.

**Claims**

1. A direct-current power supply, comprising:

   a primary circuit (13) that converts DC power of a DC voltage source into AC power by operation of switching elements;
   a transformer (14) that receives the AC power that is output from the primary circuit (13), and inputs the AC power to a primary winding;
   a secondary circuit (15) that converts into DC power the AC power which is output from a secondary winding of the transformer (14); and
a resonance circuit (21) that includes a series circuit connected in parallel to a DC output end of the secondary circuit (15) and formed by a resonance switching element and a resonance capacitor (17), both connected in series to each other;
wherein a first reactor (Lz) is connected in series midway on a current path extending from a positive output end of the secondary circuit (15) via the resonance circuit (21) to a negative output end of the secondary circuit; and wherein an inductance component of the first reactor (Lz) is added to that of the current path formed by the secondary circuit and the resonance circuit; **characterized in that**
a ratio of the inductance of the first reactor (Lz) to a sum of leakage inductance of the transformer and the inductance of the first reactor (Lz) is set to a value at which a maximum voltage applied to the resonance switching element when the switching elements of the primary circuit (13) turn on will not exceed a maximum allowable operating voltage of the resonance switching element and at which the maximum voltage becomes close to the maximum allowable operating voltage of the resonance switching element.

2.  The direct-current power supply according to claim 1, wherein
the first reactor is connected in series to the resonance circuit (21) or connected in series between the resonance switching element and the resonance capacitor (17) .

3.  The direct-current power supply according to claim 1 or 2, wherein
a second reactor is connected in series between the positive output end of the secondary circuit (15) and a positive input end of the resonance circuit (21).

4.  The direct-current power supply according to any of claims 1 to 3, wherein
the inductance component of the first reactor is controlled by a shape and/or length of an interconnect of the first reactor.

5.  The direct-current power supply according to any of claims 1 to 4, further comprising:

    a filter circuit that includes a filter reactor (18) and a filter capacitor (19) and smoothens the DC power that is output from the secondary circuit; and
    a snubber circuit (24) in which a circuit formed by a snubber diode and a snubber capacitor discharging diode connected in series to the snubber diode is connected in parallel to the filter capacitor of the filter circuit and in which a snubber capacitor is connected from the positive output end of the secondary circuit to a midpoint between the series-connected snubber diode and snubber capacitor discharging diode.

**Patentansprüche**

1.  Gleichstromversorgung, die Folgendes umfasst:

    einen primären Schaltkreis (13), der die Gleichstromleistung einer GS-Spannungsquelle in Wechselstromleistung durch das Betätigen von Schaltelementen umwandelt;
    einen Transformator (14), der die Wechselstromleistung, die vom primären Schaltkreis (13) ausgegeben wird, empfängt und die Wechselstromleistung einer primären Wicklung zuführt;
    einen sekundären Schaltkreis (15), der die Wechselstromleistung, die von einer zweiten Wicklung des Transformators (14) ausgegeben wird, in Gleichstromleistung umwandelt; und
    einen Resonanzschaltkreis (21), der eine Serienschaltung umfasst, die parallel mit einem GS-Ausgangsende des sekundären Schaltkreises (15) verbunden ist und aus einem Resonanzschaltelement und einem Resonanzkondensator (17) gebildet ist, die beide in Serie miteinander geschaltet sind;
    wobei eine erste Drossel (Lz) in der Mitte des Strompfads in Serie geschaltet ist, der sich von einem positiven Ausgangsende des sekundären Schaltkreises (15) über den Resonanzschaltkreis (21) zu einem negativen Ausgangsende des sekundären Schaltkreises erstreckt; und
    wobei eine Induktivitätskomponente der ersten Drossel (Lz) zu jener des Strompfads hinzugefügt ist, der vom sekundären Schaltkreis und dem Resonanzschaltkreis gebildet wird; **dadurch gekennzeichnet, dass**
    ein Verhältnis der Induktivität der ersten Drossel (Lz) zu der Summe von Verlustinduktivität im Transformator und der Induktivität der ersten Drossel (Lz) auf einen Wert festgelegt ist, bei dem
    eine Maximalspannung, die an das Resonanzschaltelement angelegt wird, wenn sich die Schaltelemente des primären Schaltkreises (13) einschalten, eine zulässige Maximalbetriebsspannung des Resonanzschaltelements nicht überschreitet und bei dem sich die Maximalspannung der zulässigen Maximalbetriebsspannung des Resonanzschaltelements annähert.

**2.** Gleichstromversorgung nach Anspruch 1, wobei die erste Drossel in Serie mit dem Resonanzschaltkreis (21) oder in Serie zwischen dem Resonanzschaltelement und dem Resonanzkondensator (17) geschaltet ist.

**3.** Gleichstromversorgung nach Anspruch 1 oder 2, wobei
eine zweite Drossel in Serie zwischen dem positiven Ausgangsende des sekundären Schaltkreises (15) und einem positiven Eingangsende des Resonanzschaltkreises (21) geschaltet ist.

**4.** Gleichstromversorgung nach einem der Ansprüche 1 bis 3, wobei die Induktivitätskomponente der ersten Drossel von einer Form und/oder Länge einer Zwischenverbindung der ersten Drossel gesteuert wird.

**5.** Gleichstromversorgung nach einem der Ansprüche 1-4, die ferner Folgendes umfasst:

einen Filterschaltkreis, der eine Filterdrossel (18) und einen Filterkondensator (19) umfasst und die Gleichstromleistung, die vom sekundären Schaltkreis ausgegeben wird, glättet; und einen Snubber-Schaltkreis (24), in dem ein Schaltkreis aus einer Snubber-Diode und einer Snubber-Kondensator-Entladungsdiode, die in Serie mit der Snubber-Diode geschaltet ist, parallel mit dem Filterkondensator des Filterkreises geschaltet ist und indem ein Snubber-Kondensator vom positiven Ausgangsende des sekundären Schaltkreises bis zu einem Mittelpunkt zwischen den in Serie geschalteten Snubber-Diode und Snubber-Kondensator-Entladungsdiode geschaltet ist.

**Revendications**

**1.** Alimentation à courant continu comprenant :

un circuit primaire (13) qui convertit une puissance DC d'une source de tension DC en une puissance AC par l'intermédiaire d'éléments de commutation ;
un transformateur (14) qui reçoit la puissance AC qui est générée par le circuit primaire (13), et qui applique la puissance AC à un enroulement primaire ;
un circuit secondaire (15) qui convertit en puissance DC la puissance AC qui est générée par un enroulement secondaire du transformateur (14) ; et
un circuit de résonance (21) qui comprend un circuit en série connecté en parallèle à une extrémité de sortie DC du circuit secondaire (15) et constitué d'un élément de commutation à résonance et d'un condensateur à résonance (17), tous les deux connectés en série l'un à l'autre ;
un premier réacteur (Lz) étant connecté en série à mi-chemin sur un trajet de courant s'étendant d'une extrémité de sortie positive du circuit secondaire (15) via le circuit de résonance (21) vers une extrémité de sortie négative du circuit secondaire ; et
un composant à inductance du premier réacteur (Lz) étant ajouté à celui du trajet de courant constitué par le circuit secondaire et du circuit de résonance ;
**caractérisée en ce que**
un rapport entre l'inductance du premier réacteur (Lz) et une somme de l'inductance de fuite du transformateur et de l'inductance du premier réacteur (Lz) est réglée à une valeur à laquelle une tension maximum appliquée à l'élément de commutation à résonance lorsque les éléments de commutation du circuit primaire (13) sont activés ne dépasse par une tension de service maximum admissible de l'élément de commutation à résonance et à laquelle la tension maximum s'approche de la tension de service maximum admissible de l'élément de commutation à résonance.

**2.** Alimentation à courant continu selon la revendication 1, dans laquelle
le premier réacteur est connecté en série au circuit de résonance (21) ou connecté en série entre l'élément de commutation à résonance et le condensateur à résonance (17) .

**3.** Alimentation à courant continu selon la revendication 1 ou 2, dans laquelle
un deuxième réacteur est connecté en série entre l'extrémité de sortie positive du circuit secondaire (15) et une extrémité d'entrée positive du circuit de résonance (21) .

**4.** Alimentation à courant continu selon l'une des revendications 1 à 3, dans laquelle
le composant à inductance du premier réacteur est contrôlé par une forme et/ou une longueur d'une interconnexion du premier réacteur.

**5.** Alimentation à courant continu selon l'une des revendications 1 à 4, comprenant en outre :

un circuit de filtre qui comprend un réacteur de filtre (18) et un condensateur de filtre (19) et qui lisse la puissance DC qui est générée par le circuit secondaire ; et
un circuit amortisseur (24) dans lequel un circuit constitué d'une diode d'amortissement et d'une diode de décharge de condensateur d'amortissement, connecté en série avec la diode d'amortissement, est connecté en parallèle au condensateur de filtre du circuit de filtre et dans lequel un condensateur d'amortissement est connecté de l'extrémité de sortie positive du circuit secondaire vers un point central entre la diode d'amortissement connectée en série et la diode de décharge de condensateur d'amortissement.

# FIG.1

EP 2 814 165 B1

F I G . 2

# FIG.3

WHEN $\dfrac{Lz}{Ls2+Lz}$ IS SMALL

RESONANCE SWITCH Qz — OFF — ON — OFF

CURRENT Iz — Cz DISCHARGING

$\dfrac{di_z}{dl}$ — Cz CHARGING

$I_{zsm}$

VOLTAGE Vz

WHEN $\dfrac{Lz}{Ls2+Lz}$ IS LARGE

RESONANCE SWITCH Qz — OFF — ON — OFF

CURRENT Iz — Cz DISCHARGING

Cz CHARGING

VOLTAGE Vz

# FIG.4

# FIG.5

WHEN $\dfrac{Lz}{Ls2+Lz}$ IS SMALL

$\left( \dfrac{Lz}{Ls2+Lz} = 0.06 \right)$

CURRENT-Iz

CURRENT-Iz
POSITION OF 0 A

VOLTAGE Vz

VOLTAGE Vz
POSITION OF 0 V

WHEN $\dfrac{Lz}{Ls2+Lz}$ IS LARGE

$\left( \dfrac{Lz}{Ls2+Lz} = 0.18 \right)$

MAXIMUM SURGE
CURRENT VALUE: SMALL
CHANGE RATE OF
CURRENT LEVEL: SMALL

OSCILLATION: SMALL

CURRENT-Iz

CURRENT-Iz
POSITION OF 0 A

VOLTAGE Vz

VOLTAGE Vz
POSITION OF 0 V

EP 2 814 165 B1

FIG. 6

FIG.7

EP 2 814 165 B1

# FIG.8

TIME  t0  t1 t3    t2  t4 t5b  t5a  t6    t7 t9  t8    t10 t11b  t11a  t12

MAIN SWITCHING ELEMENT Q1 — OFF / ON / OFF

RESONANCE SWITCH Qz — OFF / ON / OFF

MAIN SWITCHING ELEMENT Q2 — OFF / ON / OFF

CURRENT Ip

CURRENT In

CURRENT Iz — Cz DISCHARGING

CURRENT Is — Cz CHARGING

VOLTAGE Vcz

CURRENT Ir

CURRENT Io

# FIG.9

# FIG.10

**REFERENCES CITED IN THE DESCRIPTION**

**Patent documents cited in the description**

- JP 2012075210 A